# EUROPEAN PATENT SPECIFICATION

(11) **EP 3 100 919 B1**
(45) Date of publication and mention of the grant of the patent: **19.09.2018**
(21) Application number: 14880464.4
(22) Date of filing: 03.12.2014
(51) Int. Cl.: B60R 25/10, B60R 25/20, B60Q 3/292

(54) **VEHICLE**
FAHRZEUG
VÉHICULE

(30) Priority: 30.01.2014 JP 2014016071
(43) Date of publication of application: 07.12.2016
(73) Proprietor: Kabushiki Kaisha Honda Lock, Miyazaki-shi, Miyazaki 880-0293 (JP)
(72) Inventor: KUROIWA Takenobu, Miyazaki-shi Miyazaki 880-0293 (JP)
(74) Representative: Iannone, Carlo Luigi
(86) International application number: PCT/JP2014/081980
(87) International publication number: WO 2015/114940

(56) References cited:
- DE-A1-102004 024 253
- JP-A- H01 275 239
- JP-A- 2008 132 808
- JP-B2- 4 144 937
- US-A1- 2002 171 536

## Description

### TECHNICAL FIELD

The present invention relates to a vehicle that includes an ignition switch operation device that switches over a switching mode of an ignition switch in response to operation of a mechanical key inserted into a casing or in response to operation of an operating part, an alarm being set off when there is an unauthorized operation in a security set state.

### BACKGROUND ART

A vehicle according to the preamble of claim 1 is known from US20020171536A. A two-wheeled motor vehicle in which an alarm is set off when there is an unauthorized operation in a security set state, and the security set state is displayed by the flashing of an indicator lamp affixed to an upper face of a fuel tank is known from Patent Document 1.

### RELATED ART DOCUMENTS

### PATENT DOCUMENTS

Patent Document 1: Japanese Patent No. 4144937

### SUMMARY OF THE INVENTION

### PROBLEMS TO BE SOLVED BY THE INVENTION

However, the arrangement disclosed in Patent Document 1 above requires an indicator lamp exclusively used for displaying the security set state; not only does the number of components increase, but it is also necessary to ensure that there is space for mounting the indicator lamp, and this causes a restriction on the degree of freedom in terms of design.

The present invention has been accomplished in light of such circumstances, and it is an object thereof to provide a vehicle that enables a security set state to be displayed while decreasing the number of components and increasing the degree of freedom in terms of design.

### MEANS FOR SOLVING THE PROBLEMS

In order to attain the above object, according to a first aspect of the present invention, there is provided a vehicle according to claim 1.

Further, according to a second aspect of the present invention, in addition to the frst aspect, a color of the illumination portion is set so as to differ between the normal illumination state and the state for displaying the security set state.

### EFFECTS OF THE INVENTION

In accordance with the first aspect of the present invention, since the illumination portion, which lights the insertion position for the mechanical key or the area around the operating part in a normal illumination state, can display the security set state, it is unnecessary to employ a component exclusively used for displaying the security set state to thus reduce the number of components and cut the cost, and it is unnecessary to ensure that there is space for disposing a component for exclusive use to thus increase the degree of freedom in terms of design of the vehicle.

Furthermore, in accordance with the second aspect of the present invention, the color of the illumination portion differs between the normal illumination state and the state for displaying the security set state, and the security set state can thus be displayed clearly.

### BRIEF DESCRIPTION OF DRAWINGS

[FIG. 1] FIG. 1 is a simplified side view of a two-wheeled motor vehicle of a first embodiment. (first embodiment)
[FIG. 2] FIG. 2 is a vertical sectional view, along line 2-2 in FIG. 3, of an essential part of an ignition switch operation device. (first embodiment)
[FIG. 3] FIG. 3 is a view in the direction of arrow 3 in Fig. 2. (first embodiment)
[FIG. 4] FIG. 4 is a vertical sectional view along line 4-4 in FIG. 3. (first embodiment)
[FIG. 5] FIG. 5 is a view in the direction of arrow 5 in Fig. 3. (first embodiment)
[FIG. 6] FIG. 6 is an exploded perspective view of a casing. (first embodiment)
[FIG. 7] FIG. 7 is a side view of a mechanical key and a magnet key. (first embodiment)
[FIG. 8] FIG. 8 is a front view of a light guide member. (first embodiment)
[FIG. 9] FIG. 9 is a perspective view of a remote operation device. (first embodiment)
[FIG. 10] FIG. 10 is a perspective view of an ignition switch operation device. (second embodiment)
[FIG. 11] FIG. 11 is a front view of the ignition switch operation device from the direction of arrow 11 in FIG. 10. (second embodiment)
[FIG. 12] FIG. 12 is a perspective view of a light guide member. (second embodiment)
[FIG. 13] FIG. 13 is a front view of the light guide member from the direction of arrow 13 in FIG. 12. (second embodiment)

### EXPLANATION OF REFERENCE NUMERALS AND SYMBOLS

10, 80 Ignition switch operation device
16 Casing
22 Mechanical key
50b, 90b Illumination portion
73 Ignition switch
86 Knob, which is an operating part

### MODES FOR CARRYING OUT THE INVENTION

Embodiments of the present invention are explained below by reference to the attached drawings.

### FIRST EMBODIMENT

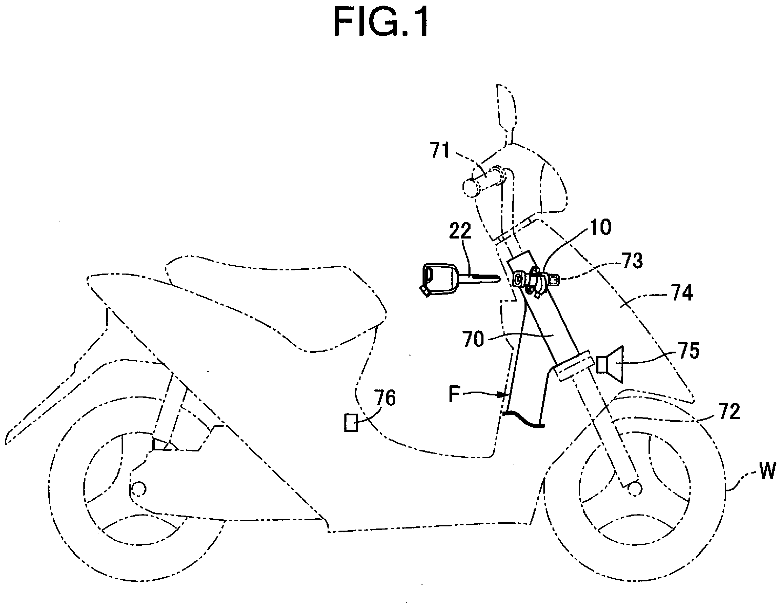

First, in FIG. 1, a vehicle body frame F of a two-wheeled motor vehicle, which is a vehicle, includes a head pipe 70 at the front end. Steerably supported on the head pipe 70 are bar-shaped handlebars 71 and a front fork 72 axially supporting a front wheel W, and mounted thereon so as to switch over the switching mode of an ignition switch 73 is an ignition switch operation device 10 operated by means of a mechanical key 22.

Disposed in front of the head pipe 70 is a horn 75 that is covered by a front cover 74 covering the head pipe 70 from the front. Disposed on the vehicle body frame F is a sensor 76 that detects an unauthorized operation, this sensor 76 detecting for example inclination of the vehicle body in all directions, that is, over 360 degrees, and determining, as an unauthorized operation being carried out, a state in which the vehicle body is inclined when the two-wheeled motor vehicle is in a parked state.

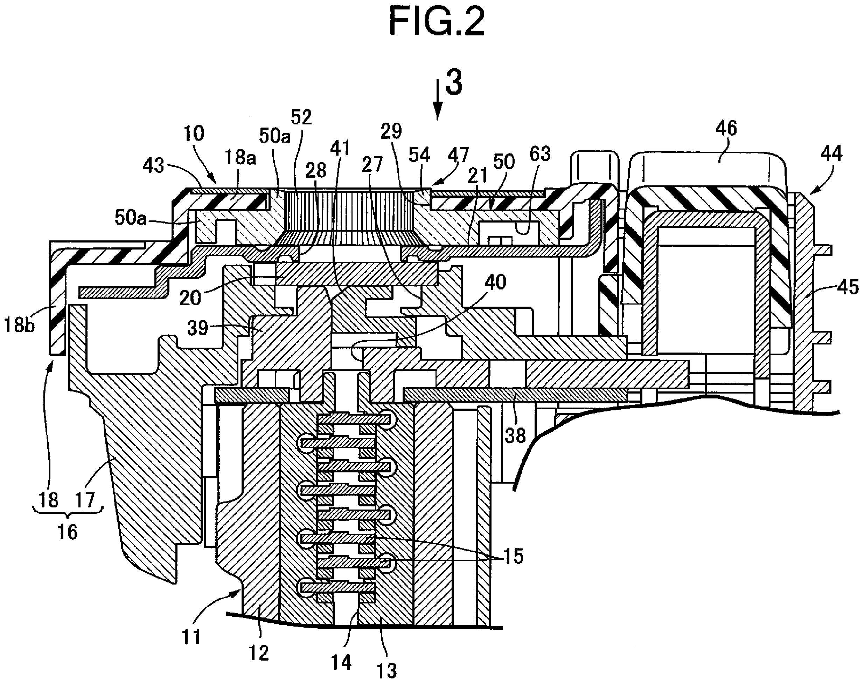

In FIG. 2, the ignition switch operation device 10 includes a cylinder lock 11 that can switch the switching mode of the ignition switch 73 and that can switch between a locked state and an unlocked state of the steering.

This cylinder lock 11 includes a cylinder body 12 that is fixed to the head pipe 70 of the vehicle body frame F, an inner cylinder 13 that has a key hole 14 and is pivotably housed in the cylinder body 12, and a plurality of tumblers 15 that are disposed in the inner cylinder 13 so that they can switchably engage with and disengage from the cylinder body 12.

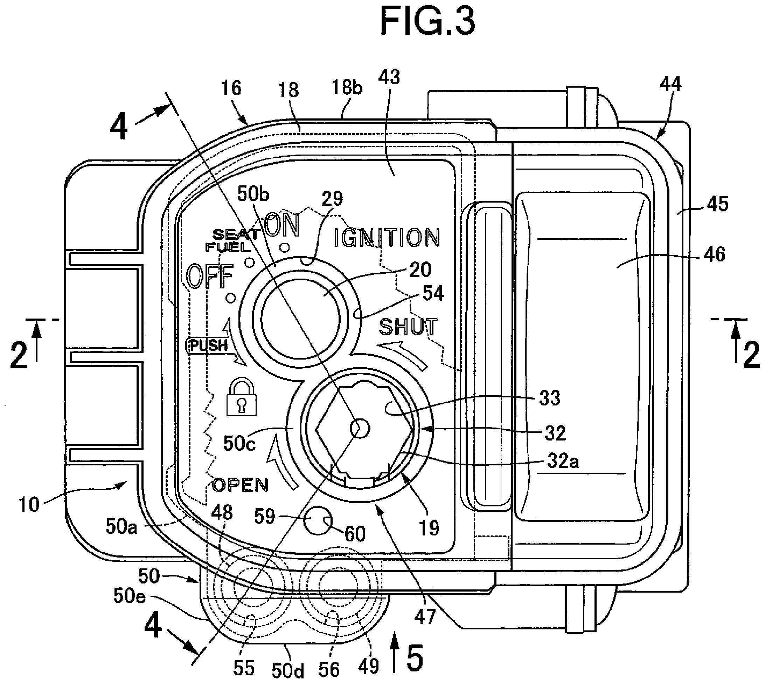

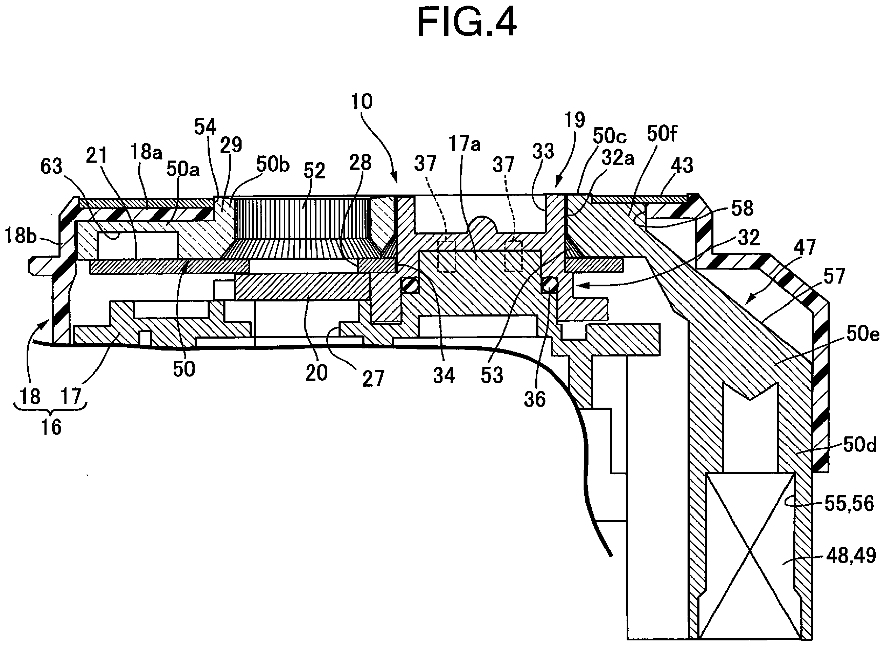

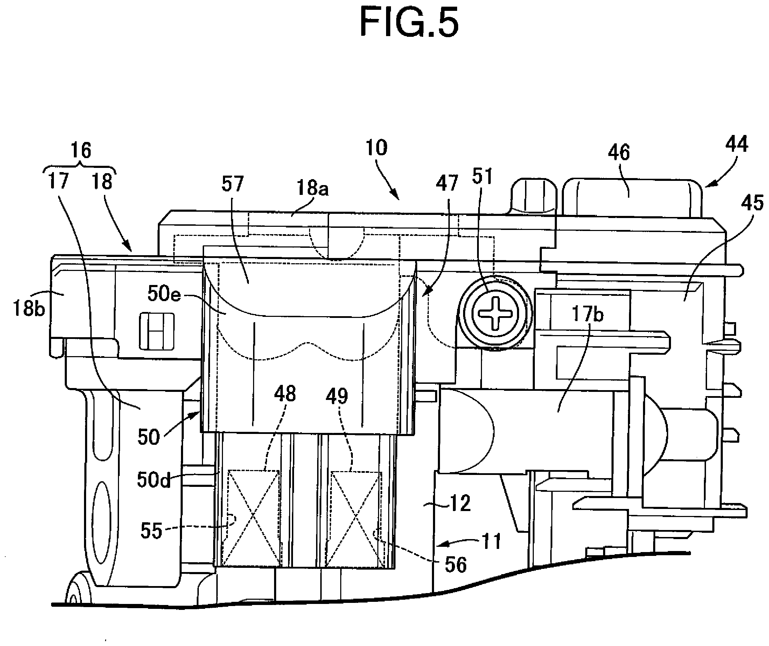

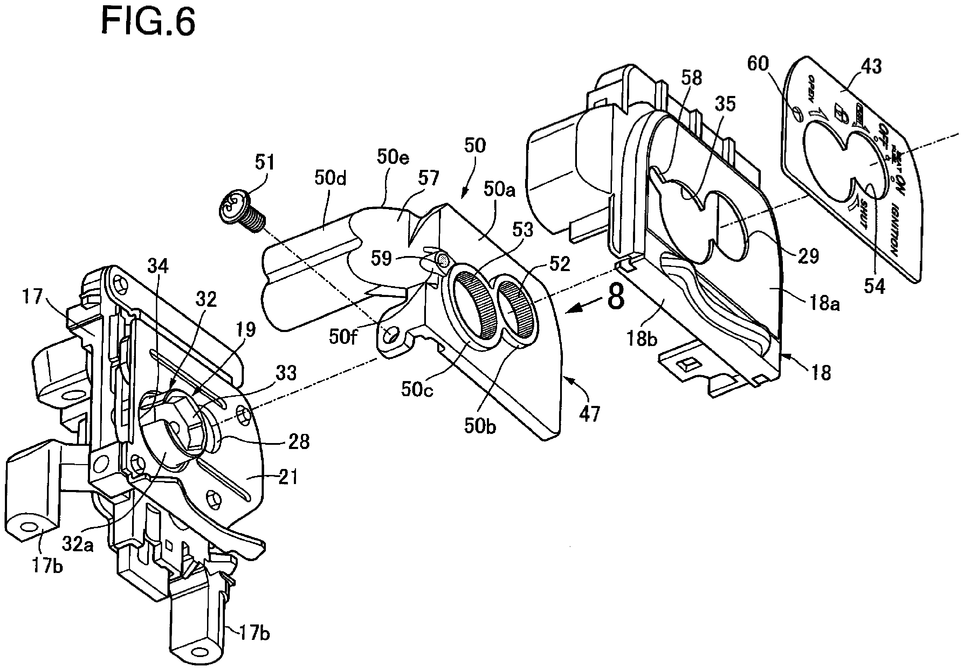

Referring in addition to FIG. 3 to FIG. 6, a casing 16 is provide so as to be connected to one end part of the cylinder body 12 so as to cover the one end part of the cylinder body 12, this casing 16 having a magnet lock 19 disposed therein and having a shutter plate 20 housed therein.

The casing 16 is formed from a case member 17, made of a non-magnetic material, that is secured to the cylinder body 12, and a cover member 18, made of a synthetic resin, that is mounted on the case member 17 so as to cover the case member 17 from the side opposite to the cylinder body 12.

The cover member 18 is formed so as to integrally have a cover plate 18a that is disposed on an end part on the side opposite to the cylinder body 12, and a side wall 18b that is connected to the peripheral edge of the cover plate 18a so as to cover part of the outer periphery of the case member 17 from the outside. Furthermore, housed within the casing 16 is a protector 21 made of metal, this protector 21 being formed into a flat plate shape so as to be disposed between the cover plate 18a of the cover member 18 and the shutter plate 20 and being fixed to the case member 17.

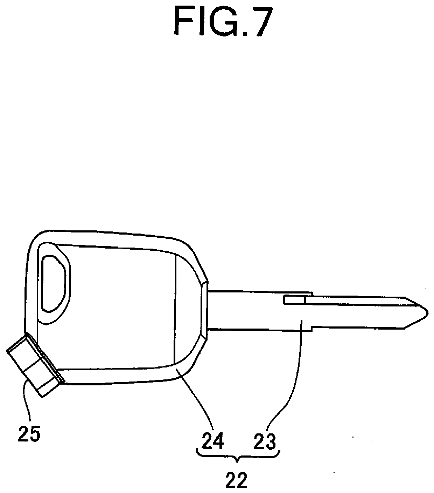

In FIG. 7, the mechanical key 22, which is for carrying out locking/unlocking of the cylinder lock 11, is formed by embedding in a synthetic resin grip part 24 one end part of a key plate 23 that can be inserted into the key hole 14, a magnet key 25 for unlocking the magnet lock 19 being provided integrally with the grip part 24 and the magnet key 25 being formed so as to have an irregular polygonal cross-sectional external shape.

Provided in the case member 17 is a first key insertion hole 27 corresponding to the key hole 14 of the cylinder lock 11, and provided in the protector 21 is a second key insertion hole 28 corresponding to the first key insertion hole 27. Furthermore, provided in the cover plate 18a of the cover member 18 is a circular first opening 29 corresponding to the key hole 14 and the first and second key insertion holes 27 and 28 so that the mechanical key 22 can be inserted thereinto.

The shutter plate 20 is disposed between the protector 21 and the case member 17 within the casing 16 and can slide between a closed position in which it cuts off communication between the first and second key insertion holes 27 and 28 so as to make it impossible for the mechanical key 22 to be inserted into the key hole 14 and an open position in which the first and second key insertion holes 27 and 28 are opened so as to enable the mechanical key 22 to be inserted into the key hole 14.

Sliding of this shutter plate 20 is permitted by unlocking the magnet lock 19 disposed in the casing 16 by means of the magnet key 25, this magnet lock 19 including a rotor 32 that is pivotably supported on the case member 17 of the casing 16 and operatively linked to the shutter plate 20. This rotor 32 is basically formed into a cylindrical shape, a tubular fitting portion 32a that has a cutout in part of the peripheral direction so as to form an irregular polygonal fitting recess 33 into which the magnet key 25 is fitted is provided integrally with the rotor 32, and a through hole 34 through which the tubular fitting portion 32a extends is provided in the protector 21.

A circular cross-section supporting projecting portion 17a projecting on the cover plate 18a side is projectingly provided integrally with the case member 17 of the casing 16. A circular second opening 35 is provided in a portion, corresponding to this supporting projecting portion 17a, of the cover plate 18a of the cover member 18, and the first opening 29 and the second opening 35 are formed in a mutually connected manner so as to form a figure of '8'.

The rotor 32 is formed into a substantially cylindrical shape from a non-magnetic material and is pivotably supported via the supporting projecting portion 17a; an O ring 36 is disposed between a base part of the supporting projecting portion 17a and the rotor 32, and the outer end of the tubular fitting portion 32a, which is integral with the rotor 32, is disposed so as to face the second opening 35.

A plurality of pins 37, which are formed from magnets, are slidably fitted into the extremity of the supporting projecting portion 17a so as to be capable of moving between a position where they engage with the rotor 32 and a position where the engagement is released, each pin 37 being resiliently urged toward the side where it engages with the rotor 32.

In such a magnet lock 19, fitting a legitimate magnet key 25 into the fitting recess 33 of the rotor 32 enables the pin 37 to move, against the resilient urging force acting on the pin 37, toward the side where engagement with the rotor 32 is released, thereby allowing the rotor 32 to pivot.

Pivoting the magnet key 25 fitted into the fitting recess 33 pivots the rotor 32 and moves the shutter plate 20 operatively linked to the rotor 32 from the closed position to the open position.

A back face support plate 38 is fixed to a face of the case member 17 of the casing 16 on the cylinder body 12 side, a cam member 39 relatively non-pivotably linked to the inner cylinder 13 is housed between the back face support plate 38 and the case member 17, and a third key insertion hole 40 corresponding to the key hole 14 is provided in the cam member 39.

Slidably supported on the cam member 39 is a lid member 41 that can move between an open position where the third key insertion hole 40 is opened and a closed position where the third key insertion hole 40 is closed, the lid member 41 being spring-biased toward the closed position side.

Furthermore, a design sheet 43 is affixed to an outer face of the cover plate 18a of the cover member 18, the design sheet 43 displaying the operating positions for the mechanical key 22 inserted into the key hole 14, the direction for the magnet key 25 to be operated in the magnet lock 19, etc.

Moreover, disposed on one side of the casing 16 is an opening/closing body remote operation part 44 that can release a locked state of an opening/closing body disposed at a position away from the cylinder lock 11, for example, a riding seat that can be opened and closed. This opening/closing body remote operation part 44 includes a support case 45 that is secured to a pair of mounting arm portions 17b and 17b provided on the case member 17 and an operation element 46 that is pivotably supported on the support case 45 so as to have one part projecting outward from the support case 45.

Provided on the casing 16 is illumination means 47, the illumination means 47 including a first illumination portion 50b that can light the peripheral edge of the first opening 29, which is the insertion position for the mechanical key 22, and a second illumination portion 50c that can light the peripheral edge of the second opening 35, which the fitting recess 33 of the magnet lock 19 faces.

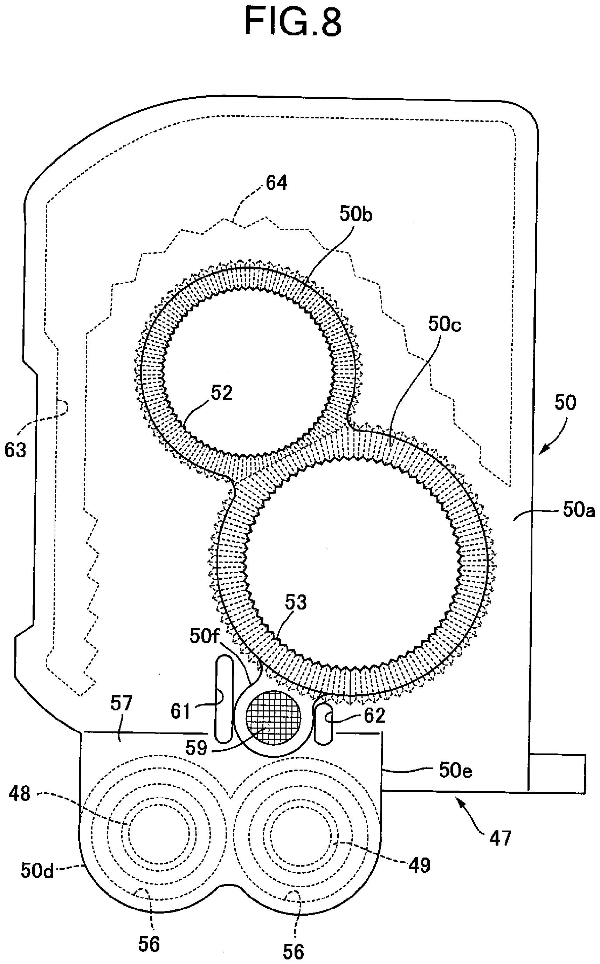

Referring in addition to FIG. 8, the illumination means 47 includes first and second light sources 48 and 49 and a single light guide member 50 that guides light from the light sources 48 and 49, the first and the second illumination portions 50b and 50c being formed from part of the light guide member 50.

The light guide member 50 is formed from a transparent synthetic resin so as to integrally have a flat plate portion 50a that is disposed in a back part of the cover plate 18a of the casing 16 so as to be sandwiched between the protector 21 and the cover plate 18a, the cylindrical first illumination portion 50b, which is provided integrally with the flat plate portion 50a so as to be disposed on an outer peripheral part of the first opening 29 of the cover plate 18a, the cylindrical second illumination portion 50c, which is provided integrally with the flat plate portion 50a so as to be disposed on an outer peripheral part of the second opening 35 of the cover plate 18a, a light source arrangement portion 50d that is disposed to one side of the casing 16 along the longitudinal direction of the cylinder body 12, and a linking portion 50e that links the light source arrangement portion 50d and the flat plate portion 50a.

The first and second illumination portions 50b and 50c are formed so as to form a figure of '8', and first and second concave-convex parts 52 and 53 for diffusing light are formed along the entire periphery on the inner periphery and an inner face, on the protector 21 side, of the first and second illumination portions 50b and 50c. A figure of '8' -shaped first through hole 54 through which the first and second illumination portions 50b and 50c face the exterior is provided in the design sheet 43, which is affixed to the cover plate 18a.

Furthermore, provided side by side in the light source arrangement portion 50d are a bottomed first housing hole 55 fixedly housing the first light source 48 such as an LED that emits blue light and a bottomed second housing hole 56 fixedly housing the second light source 49 such as an LED that emits red light. The linking portion 50e is formed so as to have an inclined reflecting face 57 that guides light from the first and second light sources 48 and 49 toward the flat plate portion 50a side.

Moreover, projectingly provided integrally with an end part of the flat plate portion 50a on the side where the linking portion 50e is connectedly provided is an extending portion 50f that is disposed, among the first and second light sources 48 and 49, close to the second light source 49, the extending portion 50f extending sideways while being connected to the second illumination portion 50c. On the other hand, provided in the cover plate 18a of the cover member 18 is a third opening 58 communicating with the second opening 35 so that the extending portion 50f can be disposed therein, formed at the extremity of the extending portion 50f is a circular third concave-convex part 59 so as to diffuse light, and provided in the design sheet 43 is a circular second through hole 60 through which the third concave-convex part 59 faces the exterior.

Formed in the flat plate portion 50a are a first slit 61 for suppressing the direct guidance of blue light from the first light source 48 toward the extending portion 50f side and a second slit 62 sandwiching the extending portion 50f between itself and the first slit 61. The second slit 62 is formed shorter than the first slit 61 so as to allow light from the second light source 49 to be guided toward the third concave-convex part 59 at the extremity of the extending portion 50f.

Furthermore, provided in a face, on the protector 21 side, of the flat plate portion 50a of the light guide member 50 is a recess 63 surrounding the first and second illumination portions 50b and 50c from the side opposite to the light source arrangement portion 50d, and formed on a portion, on the first and second illumination portions 50b and 50c side, of the inner periphery of the recess 63 is a fourth concave-convex part 64 for diffusing light.

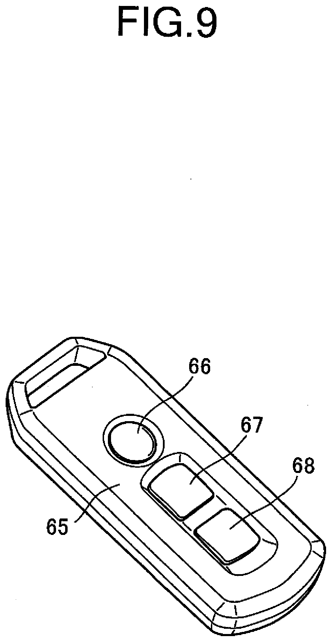

The first and second light sources 48 and 49 can be switched between being turned on and being turned off by a remote operation using a radio signal from a remote operation device 65 shown in FIG. 9. Disposed on the remote operation device 65 are an answer-back button 66 for pushing when looking for a subject vehicle parked in a car park, a security set button 67 for attaining a security set state in which an unauthorized operation carried out on a subject vehicle is detected and an alarm is set off by means of an alarm such as a horn 75, and a security unset button 68 for canceling the security set state.

When the answer-back button 66 is pushed, in response to a radio signal from the remote operation device 65 being received by the vehicle side not only does a direction indicator flash and the horn 75 sound, but the first light source 48 also turns on, the first and second illumination portions 50b and 50c attain a normal illumination state in which the insertion position for the mechanical key 22 and the location of the fitting recess 33 of the magnet lock 19 are shown, blue light is guided to the first and second illumination portions 50b and 50c to thus light the peripheral edge of the first opening 29 for mechanical key insertion blue by means of the first illumination portion 50b and to thus light the peripheral edge of the second opening 35, which the outer end of the tubular fitting portion 32a of the magnet lock 19 faces, blue by means of the second illumination portion 50c, and the third concave-convex part 59 also shines blue.

Such an ON state of the first light source 48 continues until a predetermined period of time, for example 3 minutes, has elapsed or the mechanical key 22 inserted into the key hole 14 of the cylinder lock 11 is pivoted, and after that the first light source 48 turns off.

When the security set button 67 is pushed, in response to a radio signal from the remote operation device 65 being received on the vehicle side not only does security start, but the second light source 49 also flashes, which makes the first and second illumination portions 50b and 50c emit a different color from the normal illumination state, for example a red color, in order to display a security set state. In this process, as well as the first and second illumination portions 50b and 50c, the third concave-convex part 59 also flashes with a red color, and a theft prevention effect can be enhanced by making the third concave-convex part 59, to which a larger amount of light is guided from the second light source 49, shine more strongly than the first and second illumination portions 50b and 50c do. In this security set state, inclination of the two-wheeled motor vehicle is detected by the sensor 76 and an alarm operation state is attained, and for example the horn 75 sounds.

Such a flashing state of the second light source 49 is ended by pushing the security unset button 68 for canceling the security or pivoting the mechanical key 22 inserted into the key hole 14 of the cylinder lock 11, and the second light source 49 turns off.

The operation of the first embodiment is now explained; since the first opening 29 for mechanical key insertion provided in the cover plate 18a so as to correspond to the key hole 14 of the cylinder lock 11 is provided in the cover plate 18a of the casing 16 connectedly provided on the cylinder body 12 of the cylinder lock 11, the second opening 35 having the outer end of the tubular fitting portion 32a of the magnet lock 19 facing it is provided in the cover plate 18a, the peripheral edge of the first opening 29 is lit by the first illumination portion 50b, and the peripheral edge of the second opening 35 is lit by the second illumination portion 50c, the operation of unlocking the magnet lock 19 by means of the magnet key 25 in the dark becomes easy, and the operation of inserting the mechanical key 22 into the cylinder lock 11 also becomes easy.

Furthermore, since the illumination means 47, which includes the first and second illumination portions 50b and 50c, includes the first and second light sources 48 and 49 and the single light guide member 50 that guides light from the light sources 48 and 49, and the first and second illumination portions 50b and 50c are formed from part of the light guide member 50, the number of components can be reduced.

Moreover, since the first and second light sources 48 and 49 can be switched between being turned on and being turned off by a remote operation of a user, the operation of inserting the mechanical key 22 after the shutter plate 20 has been operated to the open position by means of unlocking the magnet lock 19 can be carried out smoothly.

Furthermore, since the first and second illumination portions 50b and 50c can display a security set state in addition to a normal illumination state showing the insertion position for the mechanical key 22 and the location of the fitting recess 33 of the magnet lock 19, it is unnecessary to employ a component exclusively used for displaying the security set state to thus reduce the number of components and cut the cost, and it is unnecessary to ensure that there is space for disposing a component for exclusive use to thus increase the degree of freedom in terms of design of the two-wheeled motor vehicle.

Moreover, the color of the first and second illumination portions 50b and 50c is blue in the normal illumination state showing the first opening 29, which is the insertion position for the mechanical key 22, and the location of the fitting recess 33 of the magnet lock 19 but red in the security set state; the color of the first and second illumination portions 50b and 50c differs between the normal illumination state and the state for displaying the security set state, and the security set state can thus be displayed clearly.

### SECOND EMBODIMENT

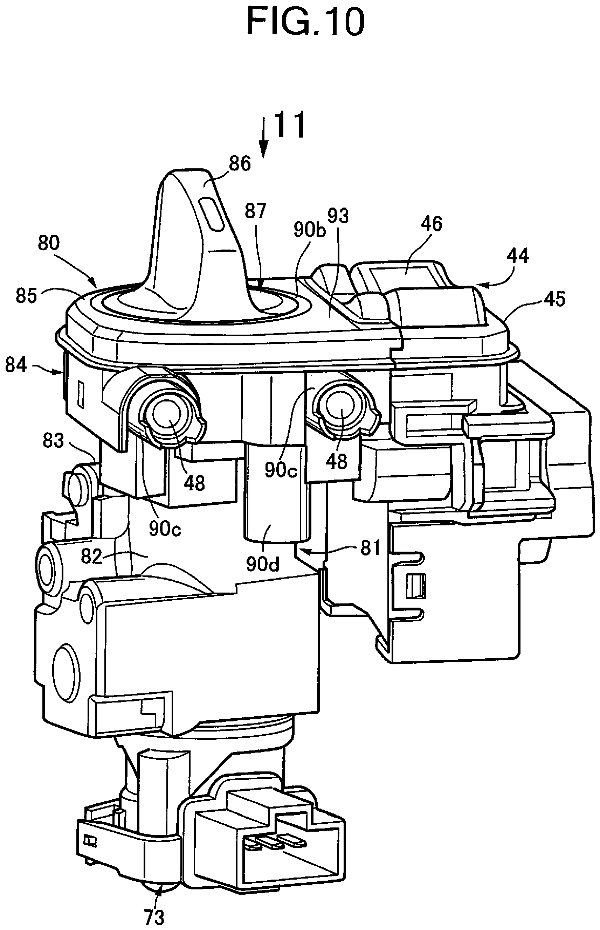

A second embodiment of the present invention is now explained by reference to FIG. 10 to FIG. 13.

First, in FIG. 10 an ignition switch operation device 80 can switch over the switching mode of an ignition switch 73 and includes a cylinder lock 81 that can switch over between a locked state and an unlocked state of the steering.

The cylinder lock 81 has a cylinder body 82 fixed to a head pipe 70 of a vehicle body frame F (see first embodiment) and an inner cylinder (not illustrated) linked to the ignition switch 73 and fitted into the cylinder body 82, and operation of an actuator 83 mounted on the cylinder body 82 enables pivoting of the inner cylinder within the cylinder body 82.

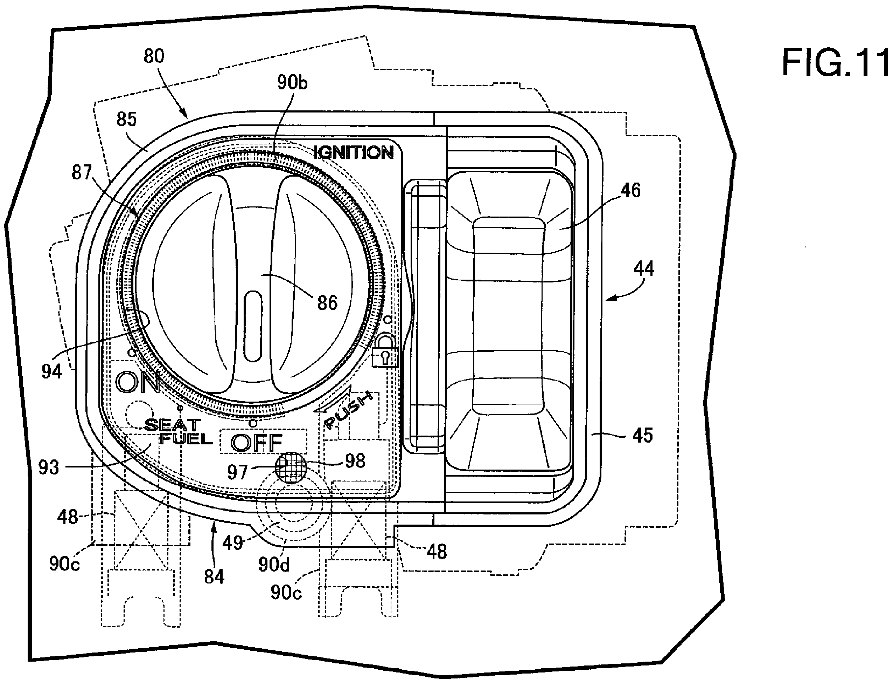

Referring in addition to FIG. 11, a casing 84 is connectedly provided on an end part, on the side opposite to the ignition switch 73, of the cylinder body 82, and a knob 86 as an operating part having part projecting from a cover plate 85 disposed in an end part, on the side opposite to the ignition switch 73, of the casing 84 is pivotably supported on the casing 84 in such a manner that it can be pushed in at a LOCK position and an OFF position, the knob 86 being linked to the inner cylinder of the cylinder lock 81. Therefore, pivoting the knob 86 in a state in which pivoting of the inner cylinder in the cylinder lock 81 is allowed enables the switching mode of the ignition switch 73 to be switched over.

Illumination means 87 is provided in the casing 84, this illumination means 87 including an illumination portion 90b that can light an area around the knob 86.

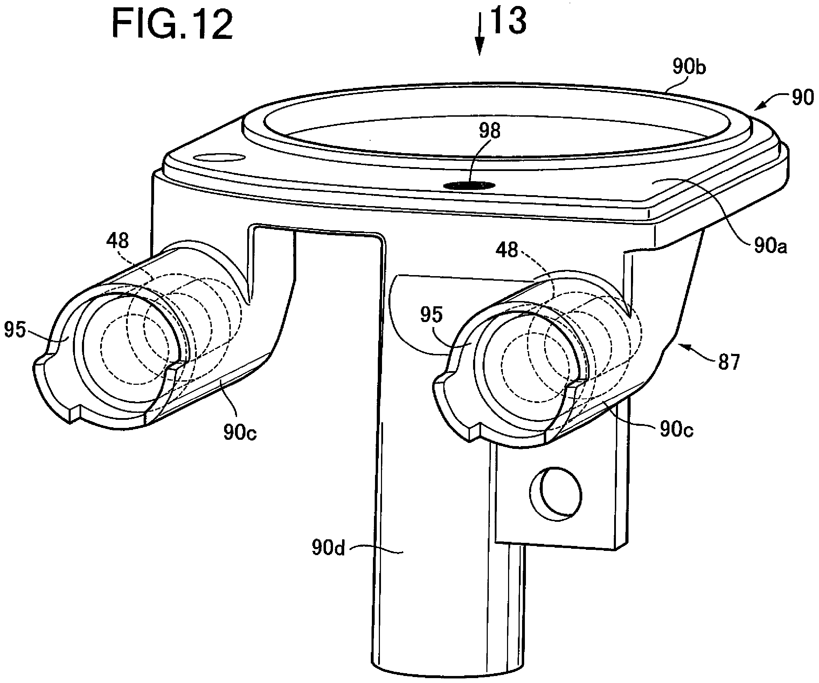

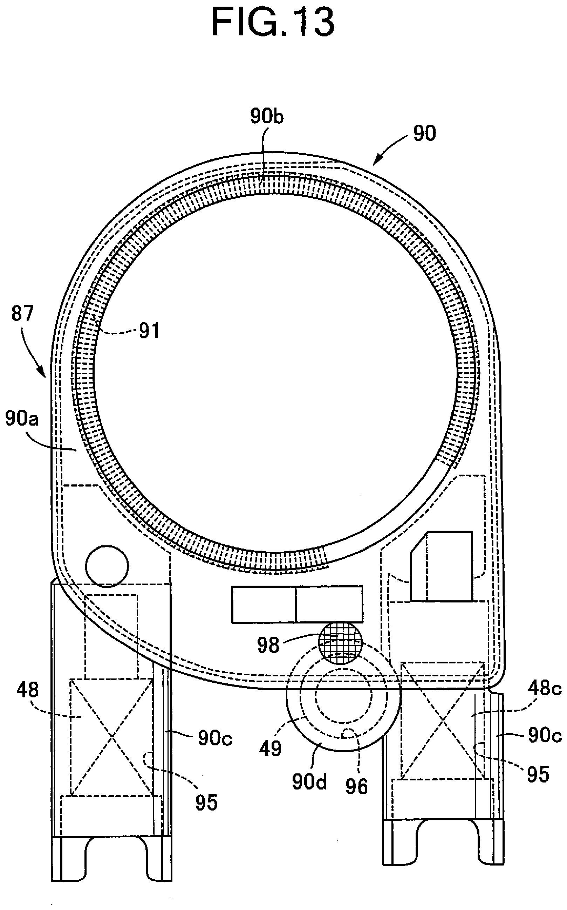

Referring in addition to FIG. 12 and FIG. 13, the illumination means 87 includes a pair of first light sources 48 and 48, a single second light source 49, and a single light guide member 90 that guides light from these light sources 48 and 49, the illumination portion 90b being formed using part of the light guide member 90.

The light guide member 90 is formed from a transparent synthetic resin while integrally having a flat plate portion 90a disposed in a back part of the cover plate 85 of the casing 84, the circular illumination portion 90b provided integrally with the flat plate portion 90a so as to surround the knob 86, a pair of first light source arrangement portions 90c and 90c connectedly provided on the flat plate portion 90a so as to project sideways from the casing 84, and a second light source arrangement portion 90d connectedly provided on the flat plate portion 90a at a position between the pair of first light source arrangement portions 90c and 90c and closer to one of the first light source arrangement portion 90c, and extending in the longitudinal direction of the cylinder body 82.

A concave-convex part 91 for diffusing light is formed on an inner face of the illumination portion 90b. Furthermore, a circular through hole 94 is provided in a design sheet 93 affixed to the cover plate 85, the illumination portion 90b facing the exterior through the circular through hole 94.

Furthermore, the first light source arrangement portions 90c are each provided with a bottomed first housing hole 95 for fixedly housing a first light source 48 such as an LED that emits blue light, and the second light source arrangement portion 90d is provided with a bottomed second housing hole 96 for fixedly housing a second light source 49 such as an LED that emits red light.

Moreover, a concave-convex part 98 facing a through hole 97 provided in the cover plate 85 and the design sheet 93 is formed at a position corresponding to a part of the flat plate portion 90a connected to the second light source arrangement portion 90d.

In such illumination means 87, when an answer-back button is pushed on a portable device possessed by a user, in response to a radio signal from the portable device being received on the vehicle side, the first light source 48 lights up with a blue color, and the illumination portion 90b and the concave-convex part 98 are lit with a blue color. The turned-on state of the first light source 48 continues for a predetermined time, for example 20 seconds, and it then turns off, and if the knob 86 is rotated before the predetermined time has elapsed, the first light source 48 turns off at this point. Here, rotation of the knob 86 at the LOCK position or the OFF position is allowed when the ID of a signal that has been wirelessly sent from the portable device side to the vehicle side after receiving a signal wirelessly sent from the vehicle side to the portable device in response to the knob 86 being pushed in is verified, and when subsequent to the rotation the knob 86 attains the OFF position or the LOCK position the position is locked again.

Furthermore, when the security set button is pushed in on the portable device, the second light source 49 flashes red, the illumination portion 90b and the concave-convex part 98 flash red, and when in this security set state the security unset button of the portable device is pushed in, the second light source 49 turns off.

Moreover, when in the security set state the answer-back button of the portable device is pushed in, the first light source 48 turns on while the second light source 49 remains flashing, and when a security unset signal from the portable device is received, the second light source 49 turns off.

In accordance with this second embodiment, since the illumination portion 90b can display a security set state in addition to a normal illumination state showing the location of the knob 86, it is unnecessary to employ a component exclusively used for displaying the security set state to thus reduce the number of components and cut the cost, and it is unnecessary to ensure that there is space for disposing a component for exclusive use to thus increase the degree of freedom in terms of design of a two-wheeled motor vehicle.

Moreover, the color of the illumination portion 90b is blue in the normal illumination state but red in the security set state; the color of the illumination portion 90b differs between the normal illumination state and the state for displaying the security set state, and the security set state can thus be displayed clearly.

## Claims

1. A vehicle comprising an ignition switch operation device (10, 80) that switches over a switching mode of an ignition switch (73) in response to operation of a mechanical key (22) inserted into a casing (16) or in response to operation of an operating part (86), an alarm being set off when there is an unauthorized operation in a security set state, comprising an illumination portion (50b, 90b) that lights an insertion position for the mechanical key (22) or an area around the operating part (86) provided on the ignition switch operation device (10, 80), the illumination portion (50b, 90b) enabling the security set state to be displayed in addition to a normal illumination state showing the insertion position for the mechanical key (22) or a location of the operating part (86),
**characterized in that** further comprises a concave-convex part (59, 98) connected to said illumination portion (50b, 90b) to diffuse light, and illumination means (47, 87) including first light sources (48) and second light sources (49), and a single light guide member (50, 90) that guides light from first light sources (48) and second light sources (49) are provided, wherein said illumination portion (50b, 90b) is formed using part of said light guide member (50, 90), said first light source (48) and said second light source (49) being switchable between being turned on and being turned off to display the security set state in addition to the normal illumination state by means of said illumination portion (50b, 90b) and said concave-convex part (59, 98).

2. The vehicle according to Claim 1, wherein a color of the illumination portion (50b, 90b) is set so as to differ between the normal illumination state and the state for displaying the security set state.

## Patentansprüche

1. Fahrzeug, das eine Zündschalterbetätigungsvorrichtung (10, 80) umfasst, die ansprechend auf eine Betätigung eines mechanischen Schlüssels (22), der in ein Gehäuse (16) eingesteckt wird, oder ansprechend auf eine Betätigung eines Betätigungsteils (86) einen Schaltmodus eines Zündschalters (73) umschaltet, wobei ein Alarm ausgelöst wird, wenn eine unberechtigte Betätigung in einem Sicherheitseinstellzustand vorliegt, umfassend einen Beleuchtungsabschnitt (50b, 90b), der eine Einsteckposition für den mechanischen Schlüssel (22) oder einen Bereich um das auf der Zündschalterbetätigungsvorrichtung (10, 80) bereitgestellte Betätigungsteil (86) beleuchtet, wobei der Beleuchtungsabschnitt (50b, 90b) es ermöglicht, dass der Sicherheitseinstellzustand zusätzlich zu einem normalen Beleuchtungszustand, der die Einsteckposition für den mechanischen Schlüssel (22) oder einen Ort des Betriebsteils (86) zeigt, angezeigt wird,
- **dadurch gekennzeichnet, dass** sie weiter ein Konkav/Konvex-Teil (59, 98), das mit dem Beleuchtungsabschnitt (50b, 90b) verbunden ist, um Licht zu verbreiten, umfasst und ein Beleuchtungsmittel (47, 87), das erste Lichtquellen (48) und zweite Lichtquellen (49) einschließt, und ein einzelnes Lichtführungselement (50, 90), das Licht von ersten Lichtquellen (48) und zweiten Lichtquellen (49) führt, bereitgestellt sind, wobei der Beleuchtungsabschnitt (50b, 90b) unter Verwendung eines Teils des Lichtführungselements (50, 90) gebildet wird, wobei die erste Lichtquelle (48) und die zweite Lichtquelle (49) zwischen einem Eingeschaltet-sein und einem Ausgeschaltet-sein umschaltbar sind, um mittels des Beleuchtungsabschnitts (50b, 90b) und des Konkav/Konvex-Teils (59, 98) den Sicherheitseinstellzustand zusätzlich zu dem normalen Beleuchtungszustand anzuzeigen.

2. Fahrzeug nach Anspruch 1, wobei eine Farbe des Beleuchtungsabschnitts (50b, 90b) so eingestellt ist, dass sie sich zwischen dem normalen Beleuchtungszustand und dem Zustand zum Anzeigen des Sicherheitseinstellzustands unterscheidet.

## Revendications

1. Véhicule comprenant un dispositif d'actionnement d'un commutateur d'allumage (10, 80) qui commute un mode de commutation d'un commutateur d'allumage (73) en réponse à l'actionnement d'une clé mécanique (22) insérée dans un boîtier (16) ou en réponse à une partie d'actionnement (86), une alarme étant déclenchée lorsqu'il y a une opération non autorisée dans un état de sécurité activée, comprenant une partie d'éclairage (50b, 90b) qui éclaire une position d'insertion pour la clé mécanique (22) ou une zone autour de la partie d'actionnement (86) ménagée sur le dispositif d'actionnement de commutateur d'allumage (10, 80), la partie d'éclairage (50b, 90b) permettant d'afficher l'état de sécurité activée en plus d'un état d'éclairage normal indiquant la position d'insertion de la clé mécanique (22) ou un emplacement de la partie d'actionnement (86),
**caractérisé en ce qu'**il comprend en outre une partie concave-convexe (59, 98) reliée à ladite partie d'éclairage (50b, 90b) pour diffuser de la lumière, et des moyens d'éclairage (47, 87) incluant des premières sources de lumière (48) et des secondes sources de lumière (49) et un élément guide de lumière (50, 90) unique qui guide la lumière provenant des premières sources de lumière (48) et des secondes sources de lumière (49) sont ménagés, dans lequel ladite partie d'éclairage (50b, 90b) est formée utilisant une partie dudit élément guide de lumière (50, 90), ladite première source de lumière (48) et ladite seconde source de lumière (49) pouvant être commutées entre être allumées et être éteintes pour afficher l'état de sécurité activée en plus de l'état d'éclairage normal au moyen de ladite partie d'éclairage (50b, 90b) et de ladite partie concave-convexe (59, 98).

2. Véhicule selon la revendication 1, dans lequel une couleur de la partie d'éclairage (50b, 90b) est réglée de manière à différer entre l'état d'éclairage normal et l'état pour afficher l'état de sécurité activée.
